# EUROPEAN PATENT APPLICATION

(11) **EP 4 546 172 A1**
(43) Date of publication of application: **30.04.2025**
(21) Application number: 23826000.4
(22) Date of filing: 10.05.2023
(51) Int. Cl.: G06F 16/957, G06Q 30/06

(54) **INFORMATION DISPLAY METHOD AND APPARATUS, AND DEVICE AND MEDIUM**

(30) Priority: 21.06.2022 CN 202210704986
(71) Applicant: BEIJING YOUZHUJU NETWORK TECHNOLOGY CO. LTD., Beijing 101299 (CN)
(72) Inventor: ZHANG, Xiaoyu, Beijing 100028 (CN); HAO, Jiajia, Beijing 100028 (CN)
(74) Representative: Dentons UK and Middle East LLP
(86) International application number: PCT/CN2023/093129
(87) International publication number: WO 2023/246350

(57) **Abstract**

The present application discloses an information display method and apparatus, a device and a medium, wherein the method comprises: displaying an object collection page for displaying the information of each object. If a login account corresponding to the object collection page is present with a target order which satisfies a first preset condition, the object collection page will display the order information of the target order. When the user is intended to view the order information of the target order, it is possible to directly view in the object collection page, without viewing by entering an order detail page of the target order after operating for multiple times, which reduces the operations of the user and improves the use experience of the user.

## Description

The present application claims priority to China Patent Application No. 202210704986.5 filed to CNIPA on June 21, 2022, the application title of which is "INFORMATION DISPLAY METHOD AND APPARATUS, DEVICE AND MEDIUM", and which is incorporated by reference in the present application in its entirety.

### TECHNICAL FIELD

The present application relates to the field of computer technology, in particular to an information display method and apparatus, a device and a medium.

### BACKGROUND

With the continuous development of Internet technology, more and more people choose to purchase products in online shopping malls. At present, an order viewing entrance is set in many shopping malls, so that the user needs to view an order of purchased products through the order viewing entrance, and the logistics status of a certain product order is displayed through an order detail page.

However, since the entrance of the order detail page is deep, the user needs to operate for multiple times before viewing a state of a product order through the order detail page, which cannot meet the requirements of the user to view an order status quickly.

### SUMMARY

In view of this, an embodiment of the present application provides an information display method and apparatus, a device and a medium, so as to display the order information on an object collection page, which meets the requirements of the user to view an order status quickly, and improve the use experience of the user.

In order to achieve the above-described object, the technical solution provided by the present application is as follows:

According to a first aspect of the present disclosure, an information display method is provided, the method comprising:
displaying an object collection page; and
displaying the order information of the target order in the object collection page if a login account corresponding to the object collection page is present with a target order which satisfies a first preset condition.

According to a second aspect of the present disclosure, an information display apparatus is provided, the apparatus comprising:
a first display unit for displaying an object collection page; and
a second display unit configured to display the order information of the target order in the object collection page if a login account corresponding to the object collection page is present with a target order which satisfies a first preset condition.

According to a third aspect of the present disclosure, an electronic device is provided, the device comprising a processor and a memory;
wherein the memory is configured to store instructions or a computer program; and
the processor is configured to execute the instructions or computer program in the memory, so as to cause the electronic device to perform the method according to the first aspect.

According to a fourth aspect of the present disclosure, a computer-readable storage medium is provided, wherein, the computer-readable storage medium has instructions stored thereon that, when run on a device, cause the device to perform the method according to the first aspect.

According to a fifth aspect of the present disclosure, a computer program product is provided, the computer program product comprises a computer program/instructions that, when executed by a processor, implement the method according to the first aspect.

Thus it can be seen that, the embodiments of the application have the following beneficial effects:
In an embodiment of the present application, an object collection page is displayed, wherein the object collection page is used to display the information of each object. If the login account corresponding to the object collection page is present with a target order which satisfies a first preset condition, the order information of the target order is displayed in the object collection page. When the user is intended to view the order information of the target order, the user can directly view in the object collection page, without viewing by entering the order detail page of the target order after operating for multiple times, which reduces the operations of the user and improves the use experience of the user.

### BRIEF DESCRIPTION OF THE DRAWINGS

In order to more explicitly explain the technical solutions in the embodiments of the present application or the prior art, a brief introduction will be given below for the accompanying drawings required to be used in the description of the embodiments or the prior art; it is obvious that, the accompanying drawings illustrated below are merely some of the embodiments recited in the present application, and for those of ordinary skill in the art, other accompanying drawings may also be obtained according to such accompanying drawings on the premise that no inventive effort is involved.
Fig. 1 is a flowchart of an information display method provided by an embodiment of the present application;
Fig. 2a is a schematic scenario view of an object collection page provided by an embodiment of the present application;
Fig. 2b is a schematic scenario view of displaying the order information provided by an embodiment of the present application;
Fig. 2c is a schematic view of a makeup structure of the order information provided by an embodiment of the present application;
Fig. 3 is a structural view of an information display apparatus provided by an embodiment of the present application;
Fig. 4 is a schematic structural view of an electronic device provided by an embodiment of the present application.

### DETAILED DESCRIPTION

In order to allow those skilled in the art to better understand the solution of the present application, the technical solution in the embodiments of the present application will be explicitly and completely described below in conjunction with the accompanying drawings in the embodiments of the present application; apparently, the described embodiments are some of the embodiments of the present application, rather than all the embodiments. On the basis of the embodiments of the present application, all the other embodiments obtained by those skilled in the art on the premise that no inventive effort is involved shall fall into the protection scope of the present application.

At present, when the user view the order information of own purchased products through the online shopping platform, it is necessary to operate for multiple times before viewing by entering an order detail page, which affects the use experience of the user. For example, the homepage of some online shopping platforms displays an "order" control, and the user triggers the control to enter an order page comprising individual orders; in order to view the status of a certain order, the user needs to click the order to view by entering an order detail page corresponding to the order.

In order to enable the user to view an order status of purchased products through the online shopping platform quickly, the present application provides an information display method; specifically, when the user enters an object collection page through a client, the object collection page is displayed, and the object collection page may display the information of a plurality of objects, so that the user may select an object necessary for purchase. If a login account corresponding to the object collection page is present with a target order which satisfies a first preset condition, the object collection page will display the order information of the target order. Wherein, the order information may comprise an order identifier and an order status; the order status is used to reflect a status of an order indicated by the order identifier, for example, the order status may comprise to be paid, balance to be paid, to be delivered, to be received and the like. The user may directly check the order information of the target order in the object collection page, so as to achieve the purpose of viewing an order status quickly by the user and improve the use experience of the user.

It may be understood that, before the technical solution of each embodiment in the present disclosure is used, the user will be informed of the type, application range and application scene of personal information involved in an appropriate manner, and user authorization will be obtained.

For example, in response to receiving an active request from the user, prompt information is sent to the user to explicitly prompt the user that the operation requested to be performed will require obtaining and applying personal information of the user. Therefore, the user may independently choose whether to provide personal information to software or hardware such as an electronic device, an application program, a server or a storage medium that performs the operations in the technical solution of the present disclosure according to the prompt information.

As an alternative but non-limiting implementation, in response to receiving an active request from the user, the method of sending the prompt information to the user may be, for example, a pop-up window, in which the prompt information may be presented in the form of text. In addition, the pop-up window may also carry a selection control for the user to choose "agree" or "disagree" to provide personal information to the electronic device.

It may be understood that, the above-described process of notifying and obtaining user authorization is only schematic, and does not limit the implementation of the present disclosure, and other methods which comply with the relevant laws and regulations may also be applied to the implementation of the present disclosure.

In order to facilitate the understanding of the technical solution provided by the embodiment of the present application, description will be made below in conjunction with the accompanying drawings.

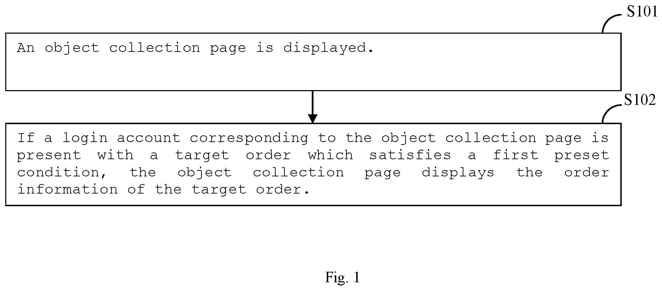

Referring to Fig. 1, which is an information display method provided by an embodiment of the present application, the method may be performed by an information display apparatus, which may be an electronic device. Wherein, the electronic device may comprise devices with a communication function such as a mobile phone, a tablet computer, a notebook computer, a desktop computer, an in-vehicle terminal, a wearable electronic device, an all-in-one machine and a smart home device, and may also be a virtual machine or a device simulated by a simulator. As shown in Fig. 1, the method may comprise the following steps:
In S101, an object collection page is displayed.

Wherein, the object collection page is used to display the information of a plurality of objects. Wherein, the object displayed in the object collection page may be set according to actual application conditions, for example, the displayed object is a product, that is, the object collection page is a product collection page.

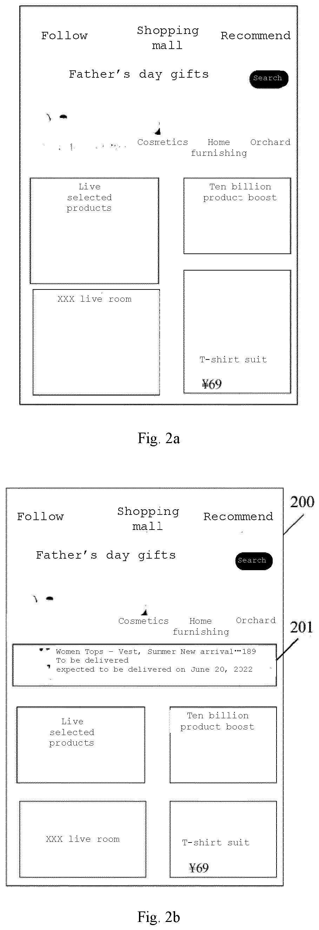

For example, in the application scenario shown in Fig. 2a, the object collection page may be a following page, a shopping mall page or a recommending page. Wherein, the following page may display the product information of a shop followed by the user, the recommending page may display the product information recommended by the client based on preferences of the user, and the shopping mall page may display the product information determined by the client based on rules configured in advance.

Specifically, the shopping mall page may be understood as a page for providing an aggregation of several product profiles for the user to select a product. In one implementation, the shopping mall page may be a page to browse and select a product during a shopping process of the user. For example, the shopping mall page may be a primary page after entering the shopping platform, and the primary page displays many products under the platform, and the user may browse many products in the primary page by sliding the primary page in order to find a product of interest for the user; for another example, the shopping mall page may also be a non-primary page of the shopping platform and a page displaying many products under the platform; for another example, the shopping mall page may also be a page in which a product under the shopping platform can be searched and many products under the platform are displayed. It may be appreciated that, the shopping mall page may be understood as a key page for the user to browse and select a product during shopping.

In S102, if a login account corresponding to the object collection page is present with a target order which satisfies a first preset condition, the object collection page displays the order information of the target order.

In this embodiment, if a login account corresponding to the object collection page is present with a target order which satisfies a first preset condition, the object collection page directly displays the order information of the target order. When the user enters the object collection page, the user can view the order information of the target order through the object collection page without entering an order detail page, which reduces the operations of the user and improves the use experience of the user. Wherein, the first preset condition may be set according to actual application conditions. For example, the first preset condition may be an order with a difference between current time and order time less than a preset duration, an order with an order status which is a preset status, or an order with an order status which is to be received and a location displayed in the logistics information which is a preset location.

It is to be noted that, a shopping client may comprise a plurality of object collection pages, and different object collection pages may correspond to different shopping types; when the object collection page displays the order information, it can display the order information matched with a shopping type corresponding to the object collection page. For example, if a shopping client comprises an object collection page of take-out and an object collection page of group purchase, the object collection page of take-out displays the order information related to take-out, and the object collection page of group purchase displays the order information related to group purchase.

In one embodiment of the present disclosure, the object collection page may display the order information of the target order in the following methods, comprising:
One method is to display a first area in the object collection page, wherein the first area is used to display the order information of the target order. That is, the first area may be divided in the object collection page in advance so that the order information of the target order is displayed through the first area. Wherein, the position of the first area in the object collection page may be set according to actual application conditions, for example, as shown in Fig. 2b, the first area 201 is divided at a middle position of the object collection page 200 to display the order information. Specifically, the order information may be displayed in the form of a card in the first area.

The other method is to display a pop-up window in the object collection page, wherein the pop-up window is used to display the order information of the target order. That is, when the user opens the object collection page, the order information of the target order is displayed in the form of a pop-up window.

Specifically, the user may select a product to be purchased through the object collection page, so that the order information corresponding to a purchased product will be generated based on a purchase operation triggered by the user. Wherein, the order information may comprise an order identifier, an order status, a product cover image of a purchased product, a product price and the like. Wherein, the order identifier is used to indicate a product purchased by the user, and may be a product name. The order status indicates a current status of a product purchased by the user, comprising states such as to be paid, balance to be paid, to be delivered and to be received. Wherein, when the price of a product purchased by the user is a promotion price, the product price in the order information may be an original price of the product.

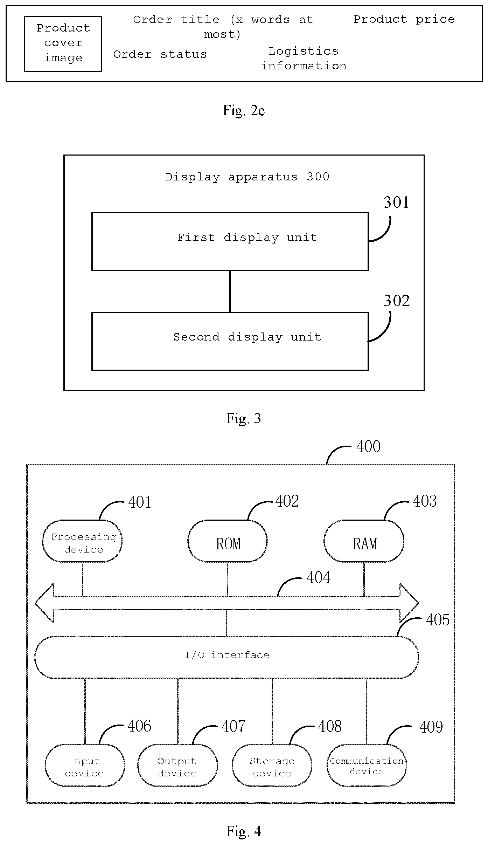

In one embodiment of the present disclosure, the order information may also comprise prompt information corresponding to the order status, so as to prompt the information required to be followed by the user in time. Wherein, for different order statuses, the corresponding prompt information pages are different; for example, when the order status is to be paid, the prompt information comprises remaining payment time; when the order status is balance to be paid, the prompt information comprises balance payment time, so that the user may pay in time to avoid the problem of a failed order transaction when payment is not in time; when the order status is to be delivered, the prompt information comprises estimated delivery time, so that the user may know the delivery time; when the order status is to be received, the prompt information comprises logistics information, so that the user may view a location of a purchased product through the logistics information. In order to enable the user to know the latest update of the product, the displayed logistics information may be the latest piece of logistics information. For example, in a schematic view of a makeup structure of the order information shown in Fig. 2c, the order information comprises a product cover image, an order title, a product price, an order status and prompt information.

In one embodiment of the present disclosure, when the order information comprises a plurality of products, a target product may be determined from the plurality of products according to a third preset condition, so that the order identifier is a product name of the target product, the product cover image is a product main view corresponding to the target product, and the product price is a product price corresponding to the target product. Wherein, the third preset condition may be set according to actual application conditions, for example, the third preset condition is a product first added to the shopping cart or a product with the most purchase amount.

In one embodiment of the present disclosure, when a target order which satisfies a first preset condition is obtained, there may be a plurality of target orders which satisfy a first preset condition; on such basis, a preset number of target orders which satisfy a first preset condition may be obtained to display the order information of the preset number of target orders in an object collection page. That is, when there are a plurality of target orders which satisfy a first preset condition, in order to reduce the processing pressure, a preset number of target orders may be sampled from the plurality of target orders which satisfy a first preset condition so as to display the preset number of target orders.

For example, when the first preset condition comprises an order with a difference between current time and order time less than a preset duration of 72 hours, the first three target orders with a difference between current time and order time less than 72 hours may be obtained. That is, three target orders with the latest order time from current time are obtained.

When the first preset condition comprises an order with an order status which is a preset status, the preset status may be set according to actual application conditions; for example, if the preset status is to be paid, the order information with an order status which is a status to be paid is filtered. When there are a plurality of order information of to be paid, a preset number of order information with the least remaining payment time may be filtered according to remaining payment time. For example, five order information with the least remaining payment time are filtered.

Further, a plurality of preset statuses may be set in the first preset condition, but the priorities between different statuses are different. For example, the preset status is to be paid, balance to be paid, to be delivered and to be received sequentially, that is, the priority of to be paid is the highest and the priority of to be received is the lowest. If a preset number of order information is not obtained from a plurality of order information corresponding to a current priority, filtering and supplementing are performed from the order information corresponding to a next priority. For example, when the preset number is five, the preset status is to be paid and there are only three order information of to be paid, it is also possible to determine two pieces of order information from the order information with an order status which is balance to be paid.

When the first preset condition comprises the order information with an order status which is to be received and a location displayed by the logistics information which is preset location, the logistics information corresponding to the order information may be obtained, so as to obtain a location of a purchased product from the logistics information, so as to be matched with a preset location. If matched, the order information will be obtained. Wherein, the preset location may be set according to actual application conditions, for example, the preset location is a province, city or district where a recipient address corresponding to the order is located.

In one embodiment of the present disclosure, when there are a plurality of order information required to be displayed, the plurality of order information may be displayed in the object collection page by carousel. Specifically, a display duration of the order information may be preset, and the next order information may be displayed after the current order information is displayed for a preset duration. For example, after each card is displayed for 3 seconds, the next order information will be displayed by carousel. Wherein, the same display duration may be set for a plurality of order information, or different display durations may be set for different order information, which will not be limited in this embodiment here.

Wherein, for a plurality of order information required to be displayed, the plurality of order information may also be sorted to prioritize the display of the order information required to be followed by the user or intended to be followed by the user. Specifically, a plurality of target orders are sorted according to a second preset condition so as to obtain a sorting result; according to the sorting result, the order information corresponding to the plurality of target orders respectively is displayed in the object collection page by carousel. Wherein, the second preset condition may comprise an order time starting from the latest relative to current time, an order status of to be paid, balance is to be paid, to be delivered and to be received with a sequentially descending display priority and the like. For example, if the second preset condition is to sort according to the priority of an order status, when there are three order information of to be displayed with an order status which is to be paid, to be delivered and to be received respectively, the display of the order information of to be paid will be prioritized; after display for three seconds, the order information of to be delivered will be displayed; after display for three seconds, the order information of to be received will be displayed; after display for three seconds, the order information of to be paid will be displayed again by carousel sequentially.

In one embodiment of the present disclosure, the method may further comprise: displaying detail information corresponding to the order information in response to a trigger operation on the order information displayed in the object collection page by the user. Wherein, the trigger operation may be a floating operation or a clicking operation. That is, the user may view detail information corresponding to the order information by triggering the order information in the object collection page.

In response to a trigger operation on the order information displayed in the object collection page by the user, detail information corresponding to the order information may be displayed through the second area in the object collection page. For example, the object collection page displays a floating layer, in which detail information corresponding to the order information is displayed.

Alternatively, in response to a trigger operation on the order information displayed in the object collection page by the user, jump from the object collection page to an order detail page corresponding to the order information, wherein the order detail page comprises detail information corresponding to the order information. Wherein, the object collection page may display a jump control corresponding to the order information, so as to jump from the primary page to the order detail page through the jump control. For example, in response to clicking a jump arrow corresponding to the order information shown in Fig. 2c by the user, jump from the object collection page to the order detail page.

Wherein, it is possible to configure a condition of triggering to update the order information displayed in the object collection page, that is, a fourth condition, in advance. When the fourth condition is satisfied, the client is triggered to obtain the order information of the target order, and the object collection page displays the order information of the target order. Wherein, the fourth preset condition may be set according to actual application conditions, for example, the fourth preset condition is submitting a new order by the user, reaching the time to update the order information displayed in the object collection page, and the like.

It may be seen that, if a login account corresponding to the object collection page is present with a target order which satisfies a first preset condition, the object collection page will display the order information of the target order. When the user is intended to view the order information of the target order, the user can directly view in the object collection page, without viewing by entering an order detail page of the target order after operating for multiple times, which reduces the operations of the user and improves the use experience of the user.

Based on the above-described method embodiments, the embodiment of the present application also provides an information display apparatus and a device, which will be described below in conjunction with the accompanying drawings.

Referring to Fig. 3, which is a structural view of an information display apparatus provided by an embodiment of the present application, as shown in Fig. 3, the apparatus 300 comprises a first display unit 301 and a second display unit 302.
The first display unit 301 is configured to display an object collection page;
The second display unit 302 is configured to display the order information of the target order in the object collection page if a login account corresponding to the object collection page is present with a target order which satisfies a first preset condition.

In one embodiment of the present disclosure, the second display unit 302 is specifically configured to display a first area in the object collection page, and the first area is used to display the order information of the target order; or, the object collection page displays a pop-up window for displaying the order information of the target order.

In one embodiment of the present disclosure, the first area is located at a middle position of the object collection page.

In one embodiment of the present disclosure, the first preset condition comprises one or more of the following: an order with a difference between current time and order time less than a preset duration, or an order with an order status which is a preset status.

In one embodiment of the present disclosure, the order information comprises an order status and prompt information corresponding to the order status.
In one embodiment of the present disclosure, if the order status is to be paid, the prompt information comprises remaining payment time;
If the order status is balance to be paid, the prompt information comprises balance payment time.
If the order status is to be delivered, the prompt information comprises estimated delivery time.
If the order status is to be received, the prompt information comprises logistics information.

In one embodiment of the present disclosure, the second display unit 302 is specifically configured to display the order information corresponding to a plurality of target orders respectively in the object collection page by carousel if there are a plurality of target orders to be displayed.

In one embodiment of the present disclosure, the second display unit 302 is specifically configured to sort the plurality of target orders according to a second preset condition so as to obtain a sorting result; and display the order information corresponding to the plurality of target orders respectively in the object collection page by carousel according to the sorting result.

In one embodiment of the present disclosure, the second preset condition comprises one or more of the following: order time starting from the latest relative to current time; or an order status of to be paid, to be paid, to be delivered and to be received with a sequentially descending display priority.

In one embodiment of the present disclosure, the apparatus further comprises a third display unit;
The third display unit is configured to display detail information corresponding to the order information in response to a trigger operation on the order information displayed in the object collection page by the user.

In one embodiment of the present disclosure, the third display unit is specifically configured to display detail information corresponding to the order information through a second area in the object collection page; or, jump from the object collection page to an order detail page corresponding to the order information, wherein the order detail page comprises detail information corresponding to the order information.

It is to be noted that, reference may be made to the relevant descriptions in the above-described method embodiments for the specific implementation of each unit in this embodiment. The division of units in the embodiment of the present application which is schematic, is only a logical function division, and there may be another division method in actual implementation. Each functional unit in the embodiments of the present application may be integrated into one processing unit; alternatively, each unit may be present physically alone, or two or more units may also be integrated into one unit. For example, in the above-described embodiments, the processing unit and the sending unit may be the same unit or different units. The above-described integrated units may be realized in the form of hardware, or realized in the form of functional units of software.

Referring to Fig. 4, a schematic structural view of an electronic device 400 suitable for implementing the embodiment of the present disclosure is shown. The terminal device in an embodiment of the present disclosure may comprise, but is not limited to, mobile terminals such as mobile phones, notebook computers, digital broadcast receivers, PDAs (personal digital assistants), PADs (pad computers), PMP (Portable Multimedia Player) and in-vehicle terminals (for example, in-vehicle navigation terminals); and fixed terminals such as digital TVs, desktop computers and the like. The electronic device shown in Fig. 4 which is only an example, shall not limit the functions and application range of the embodiments of the present disclosure.

As shown in Fig. 4, the electronic device 400 may comprise a processing device (for example, a central processing unit, a graphic processor, and the like) 401, which may perform various suitable actions and processing according to a program stored in a Read-only Memory (ROM) 402 or a program loaded from a storage device 408 into a Random Access Memory (RAM) 403. In the RAM 403, various programs and data required for the operation of the electronic device 400 are also stored. The processing device 401, the ROM 402 and the RAM 403 are connected to each other through a bus 404. The input/output (I/O) interface 405 is also connected to the bus 404.

Generally, the following devices may be connected to the I/O interface 405: an input device 406 comprising, for example, a touch screen, a touch pad, a keyboard, a mouse, a camera, a microphone, an accelerometer, a gyroscope, and the like; an output device 407 comprising, for example, a Liquid Crystal Display (LCD), a speaker, a vibrator, and the like; a storage device 408 comprising, for example, a magnetic tape, a hard disk, and the like; and a communication device 409. The communication device 409 may allow the electronic device 400 to be in wireless or wired communication with other devices to exchange data. Although Fig. 4 shows the electronic device 400 with various devices, it should be understood that there is no requirement to implement or have all the devices shown. It is possible to alternatively implement or possess more or less devices.

In particular, according to an embodiment of the present disclosure, the process described above with reference to the flowchart may be implemented as a computer software program. For example, in an embodiment of the present disclosure, there comprises a computer program product, which comprises a computer program carried on a non-transient computer-readable medium, wherein the computer program contains program codes for executing the method shown in the flowchart. In such embodiment, the computer program may be downloaded and installed from network through the communication device 409, installed from the storage device 408, or installed from the ROM 402. When the computer program is executed by the processing device 401, the above-described functions defined in the method of the embodiment of the present disclosure are performed.

The electronic device provided by the embodiment of the present disclosure pertains to the same inventive concept as the method provided by the above-described embodiments, and reference may be made to the above-described embodiments for the technical details that are not elaborated in this embodiment; moreover, this embodiment has the same beneficial effects as the above-described embodiments.

In the embodiment of the present embodiment, a computer storage medium is provided, wherein the storage medium has a computer program stored thereon that, when executed by a processor, implements the method provided in the above-described embodiments.

It is to be noted that, the above-described computer-readable medium of the present disclosure may be a computer-readable signal medium, a computer-readable storage medium or any combination thereof. The computer-readable storage medium may be, for example, but is not limited to: an electrical, magnetic, optical, electromagnetic, infrared, or semiconductor system, device, or apparatus, or a combination thereof. More specific examples of the computer-readable storage medium may comprise, but is not limited to: an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, a computer-readable storage medium may be any tangible medium that contains or stores a program which may be used by an instruction execution system, apparatus, or device or used in combination therewith. In the present disclosure, the computer-readable signal medium may comprise a data signal propagated in a baseband or as a part of a carrier wave, wherein a computer-readable program code is carried. Such propagated data signal may take many forms, comprising but not limited to an electromagnetic signal, an optical signal, or any suitable combination thereof. The computer-readable signal medium may also be any computer-readable medium other than the computer-readable storage medium, and the computer-readable signal medium may send, propagate, or transmit a program for use by an instruction execution system, apparatus, or device or in combination with therewith. The program code contained on the computer-readable medium may be transmitted by any suitable medium, comprising but not limited to: a wire, an optical cable, radio frequency (RF), and the like, or any suitable combination thereof.

In some embodiments, the client and the server may communicate using any currently known or future developed network protocol such as HTTP (Hyper Text Transfer Protocol), and may be interconnected with digital data communication in any form or medium (for example, communication network). Examples of communication networks comprise a Local Area Network ("LAN"), a Wide Area Network ("WAN"), an extranet (for example, Internet) and an end-to-end network (for example, an ad hoc end-to-end network), as well as any currently known or future developed network.

The above-described computer-readable medium may be comprised in the above-described electronic device; or may also exist alone without being assembled into the electronic device.

The above-described computer-readable medium carries one or more programs that, when executed by the electronic device, cause that the electronic device may perform the above-described method.

The computer program code for performing the operations of the present disclosure may be written in one or more programming languages or a combination thereof, and the above-described programming languages comprise but are not limited to object-oriented programming languages, such as Java, Smalltalk, and C++, and also comprise conventional procedural programming languages, such as "C" language or similar programming languages. The program code may be executed entirely on of the user computer, partly on of the user computer, executed as an independent software package, partly on of the user computer and partly executed on a remote computer, or entirely executed on the remote computer or server. In the case of a remote computer, the remote computer may be connected to of the user computer through any kind of network (comprising a local area network (LAN) or a wide area network (WAN)), or may be connected to an external computer (for example, connected through Internet using an Internet service provider).

The flowcharts and block views in the accompanying drawings illustrate the possibly implemented architectures, functions, and operations of the system, method, and computer program product according to various embodiments of the present disclosure. In this regard, each block in the flowchart or block view may represent a module, a program segment, or a part of code, wherein the module, the program segment, or the part of code contains one or more executable instructions for realizing a specified logic function. It should also be noted that, in some alternative implementations, the functions marked in the block may also occur in a different order from the order marked in the accompanying drawings. For example, two blocks shown in succession which may actually be executed substantially in parallel, may sometimes also be executed in a reverse order, depending on the functions involved. It should also be noted that each block in the block view and/or flowchart, and a combination of the blocks in the block view and/or flowchart, may be implemented by a dedicated hardware-based system that performs the specified functions or operations, or may be implemented by a combination of dedicated hardware and computer instructions.

The units involved in the described embodiments of the present disclosure may be implemented in software or hardware. Wherein, the names of the units/modules do not constitute a limitation on the units themselves under a certain circumstance.

The functions described hereinabove may be performed at least in part by one or more hardware logic components. For example, without limitation, the hardware logic components of a demonstrative type that may be used comprise: a Field Programmable Gate Array (FPGA), an Application Specific Integrated Circuit (ASIC), an Application Specific Standard Product (ASSP), a System on Chip (SOC), a Complex Programmable Logical device (CPLD) and the like.

In the context of the present disclosure, a machine-readable medium may be a tangible medium, which may contain or store a program for use by the instruction execution system, apparatus, or device or use in combination with the instruction execution system, apparatus, or device. The machine-readable medium may be a machine-readable signal medium or a machine-readable storage medium. The machine-readable medium may comprise, but is not limited to, an electronic, magnetic, optical, electromagnetic, infrared, or semiconductor system, apparatus or device, or any suitable combination thereof. More specific examples of the machine-readable storage medium may comprise an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

It is to be noted that, various embodiments in this specification are described in a progressive manner, so that differences from other embodiments are mainly illustrated in each embodiment, and reference may be made to each other for the same or similar parts between various embodiments. As for the system or apparatus disclosed in the embodiments, since it corresponds to the method disclosed in the embodiments, the descriptions are relatively simple, and for relevant parts, reference may be made to some descriptions of the method.

It should be understood that, in the present application, "at least one (item)" means one or more, and "a plurality of' means two or more. The term "and/or" is used for an associated relationship to describe associated objects, which means that there may be three relationships, for example, "A and/or B" may mean such three circumstances as A present alone, B present alone, and A and B present at the same time, wherein A and B may be singular or plural. The character "/" herein generally indicates that the contextual associated objects are in an "or" relationship. "At least one of the following (items)" or its similar expression refers to any combination of these items, comprising any combination of singular (items) or plural (items). For example, at least one of a, b or c may mean: a, b, c; "a and b", "a and c", "b and c", or "a and b and c", where a, b and c may be single or multiple.

It is also to be noted that, the relational terms such as first and second herein are only used to distinguish one entity or operation from another entity or operation, but do not necessarily require or imply any such actual relationship or sequence present between these entities or operations. Moreover, the terms "comprising", "comprising" or any other variation thereof are intended to cover non-exclusive inclusions, so that a process, method, article or device comprising a series of elements comprises not only those elements, but also other elements not explicitly listed or elements inherent to such process, method, article or device. In the case where there are no more restrictions, an element defined by the phrase "comprising one..." does not exclude an additional identical element also present in the process, method, article or device comprising the element.

The steps of the method or algorithm described in conjunction with the embodiments disclosed herein may be directly implemented in hardware, a software module executed by a processor, or a combination thereof. The software module may be placed in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The above-described description of the disclosed embodiments enables those skilled in the art to realize or use the present application. Multiple modifications to these embodiments will be obvious for those skilled in the art, and the general principles defined herein may be realized in other embodiments without departing from the spirit or scope of the present application. Therefore, the present application will not be limited to these embodiments shown herein, but intended to conform to the broadest scope consistent with the principles and novel features disclosed herein.

## Claims

1. An information display method, comprising:
displaying an object collection page; and
if a login account corresponding to the object collection page is present with a target order which satisfies a first preset condition, displaying order information of the target order in the object collection page.

2. The method according to claim 1, wherein the displaying the order information of the target order in the object collection page comprises:
displaying a first area in the object collection page, wherein the first area is used to display the order information of the target order; or,
displaying a pop-up window in the object collection page, wherein the pop-up window is used to display the order information of the target order.

3. The method according to claim 1, wherein the first area is located at a middle position of the object collection page.

4. The method according to claim 1, wherein the first preset condition comprises one or more of the following: an order with a difference between current time and order time less than a preset duration, or an order with an order status which is a preset status.

5. The method according to claim 1, wherein the order information comprises an order status and prompt information corresponding to the order status.

6. The method according to claim 5, wherein,
if the order status is to be paid, the prompt information comprises remaining payment time;
if the order status is balance to be paid, the prompt information comprises balance payment time;
if the order status is to be delivered, the prompt information comprises estimated delivery time; and
if the order status is to be received, the prompt information comprises logistics information.

7. The method according to claim 1, wherein the displaying the order information of the target order in the object collection page comprises:
if there are a plurality of target orders to be displayed, displaying the order information corresponding to the plurality of target orders respectively in the object collection page by carousel.

8. The method according to claim 7, wherein the displaying the order information corresponding to the plurality of target orders respectively in the object collection page by carousel comprises:
sorting the plurality of target orders according to a second preset condition so as to obtain a sorting result; and
displaying the order information corresponding to the plurality of target orders respectively in the object collection page by carousel according to the sorting result.

9. The method according to claim 8, wherein the second preset condition comprises one or more of the following: order time starting from the latest relative to current time; or an order status of to be paid, balance to be paid, to be delivered and to be received with a sequentially descending display priority.

10. The method according to claim 1, wherein the method further comprises:
displaying detail information corresponding to the order information in response to a trigger operation on the order information displayed in the object collection page by the user.

11. The method according to claim 10, wherein the displaying detail information corresponding to the order information comprises:
displaying detail information corresponding to the order information through a second area in the object collection page; or,
jumping from the object collection page to an order detail page corresponding to the order information, wherein the order detail page comprises detail information corresponding to the order information.

12. An information display apparatus comprising:
a first display unit for displaying an object collection page; and
a second display unit configured to display the order information of the target order in the object collection page if a login account corresponding to the object collection page is present with a target order which satisfies a first preset condition.

13. An electronic device comprising a processor and a memory;
wherein the memory is configured to store instructions or a computer program; and
the processor is configured to execute the instructions or computer program in the memory, so as to cause the electronic device to perform the method according to any of claims 1 to 11.

14. A computer-readable storage medium, wherein the computer-readable storage medium has instructions stored thereon that, when run on a device, cause the device to perform the method according to any of claims 1 to 11.

15. A computer program product that, when run on a device, causes the device to perform the method according to any of claims 1 to 11.
